# EUROPÄISCHE PATENTSCHRIFT

(11) **EP 0 340 255 B1**
(45) Veröffentlichungstag und Bekanntmachung des Hinweises auf die Patenterteilung: **15.09.1993**
(21) Anmeldenummer: 88908154.3
(22) Anmeldetag: 03.10.1988
(51) Int. Cl.: B23Q 7/14, B65G 35/06

(54) **MONTAGETRANSFERSTRASSENSYSTEM**
RAIL SYSTEM FOR CONVEYING ASSEMBLIES
SYSTEME DE VOIES-TRANSFERT DE MONTAGE

(30) Priorität: 03.10.1987 DE 3733585
(43) Veröffentlichungstag der Anmeldung: 08.11.1989
(73) Patentinhaber: ZIMMER, Albert, D-28209 Bremen (DE)
(72) Erfinder: ZIMMER, Albert, D-28209 Bremen (DE)
(74) Vertreter: Tönnies, Jan G., Dipl.-Ing.
(86) Internationale Anmeldenummer: DE8800609
(87) Internationale Veröffentlichungsnummer: WO8902805

(56) Entgegenhaltungen:
- DE-C- 697 737
- DE-U- 1 872 374
- DE-U- 8 713 347
- GB-A- 2 110 621
- US-A- 4 359 000
- US-A- 4 389 941
- US-A- 4 532 869

## Beschreibung

Die Erfindung betrifft ein Montagetransferstraßensystem mit den Merkmalen des ersten Teiles des Anspruchs 1. Ein solches system ist z.B. aus der US-A-4359 000 bekannt.

Der Erfindung liegt die Aufgabe zugrunde, ein Montagetransferstraßensystem zu schaffen, bei dem lose auf der Transferstraße aufliegende Werkstückträger ohne jede Unterbrechung und ohne Zwischenschaltung einer besonderen Drehstation ihre Transportbewegung vom Ende des einen Streckenabschnitts zum Anfang des sich daran rechtwinklig anschließenden Streckenabschnittes unmittelbar fortsetzen können.

Erfindungsgemäß wird diese Aufgabe durch die im zweiten Teil des Anspruches 1 angegebenen Merkmale gelöst. Die Unteransprüche geben vorteilhafte Ausgestaltungen der Erfindung an.

Die Erfindung wird im folgenden anhand einer Zeichnung erläutert. Dabei zeigt:
- Fig. 1: eine Draufsicht auf eine Transferstraße in Karreebauart, schematisch dargestellt,
- Fig. 2: einen Schnitt durch die Transferstraße nach der Linie II-II der Fig. 1 mit Werkstückträgern,
- Fig. 3: den Werkstückträger von unten gesehen,
- Fig. 4: ein Reibrollenpaar des Werkstückträgers von der Seite gesehen,
- Fig. 5: das Reibrollenpaar nach Fig. 4 in Draufsicht,
- Fig. 6: eine Karree-Ecke der Transferstraße von der Seite gesehen und
- Fig. 7: die Karree-Ecke von Fig. 6 in Draufsicht.

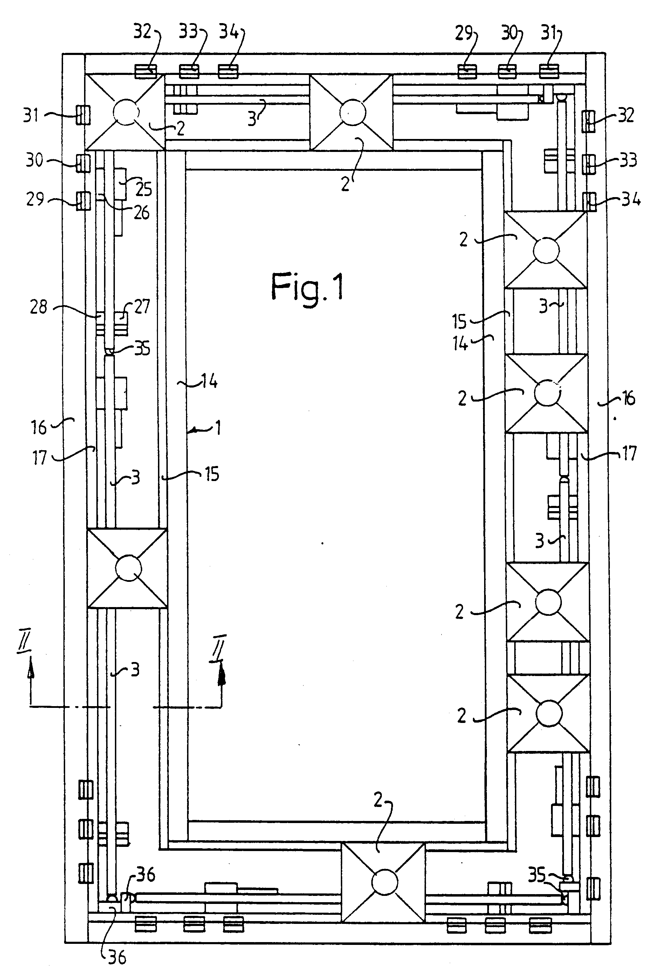

Mit 1 ist die gemäß Fig. 1 in Karree-Bauweise hergestellte Transferstraße bezeichnet, auf welcher die vorzugsweise quadratisch ausgebildeten Werkstückträger 2 entlangrollen, die über eine Reibrandverbindung ihren Vortrieb erhalten. Die Reibradverbindung wird über die Antriebswellen 3 und den auf der Unterseite des Werkstückträgers 2 vorgesehenen Reibrolleneinheiten 4, 5, 6 und 7 hergestellt. Um von dem einen Streckenabschnitt der Transferstraße zu dem sich anschließenden, rechtwinklig abknickenden Streckenabschnitt zu gelangen, ist gemäß der Erfindung der Werkstückträger 2 mit vier, in dem dargestellten Ausführungsbeispiel in einem Winkel von 45° angestellten Reibrolleneinheiten 4 bis 7 versehen, wobei jede Reibrolleneinheit im mittleren Bereich der vier Randseiten 2a bis 2d des Werkstückträgers 2 angeordnet ist, so daß jede Reibrolle bei den Umläufen des Werkstückträgers immer mit derselben Antriebswelle 3 des Transferstraße zusammenwirkt.

Die Reibrolleneinheiten 4, 5, 6, 7, die nach dem Ausführungsbeispiel als Doppelrollen ausgebildet sind, sind so am Werkstückträger 2 befestigt, daß der Auflagepunkt der Doppelrollen und der den Vortrieb bewirkenden Antriebswelle 3 seitlich vom Wellenzenit liegt. Diese Maßnahme trägt zu einer erhöhten Reibwertsteigerung bei, während die doppelte Anordnung der Reibrollen 4, 5, 6, 7 bei langen Streckenabschnitten mit mehreren hintereinander liegenden Antriebswellen 3 das Übersetzen von der einen Welle 3 zur nachfolgenden ohne Antriebsunterbrechung ermöglicht, da sich die eine Reibrolle eines Rollenpaares 4, 5, 6, 7 noch auf dem Ende der zurückliegenden Antriebswelle 3 befindet, während die andere Reibrolle des gleichen Reibrollenpaares 4, 5, 6, 7 bereits auf dem Anfang der nachfolgenden Antriebswelle 3 aufliegt. Die Reibrollen jedes Paares sind beidseitig und zueinander versetzt an einem an der Unterseite des Werkstückträgers 2 befestigten Lagerbock 8 angeordnet. Die Lagerböcke 8 nehmen hierbei zusammen mit den Reibrollen die 45°-Stellung ein. Der Winkel kann jedoch auch beispielsweise 60° betragen. Mit 9 sind die parallel zueinander verlaufenden Rollenachsen bezeichnet.

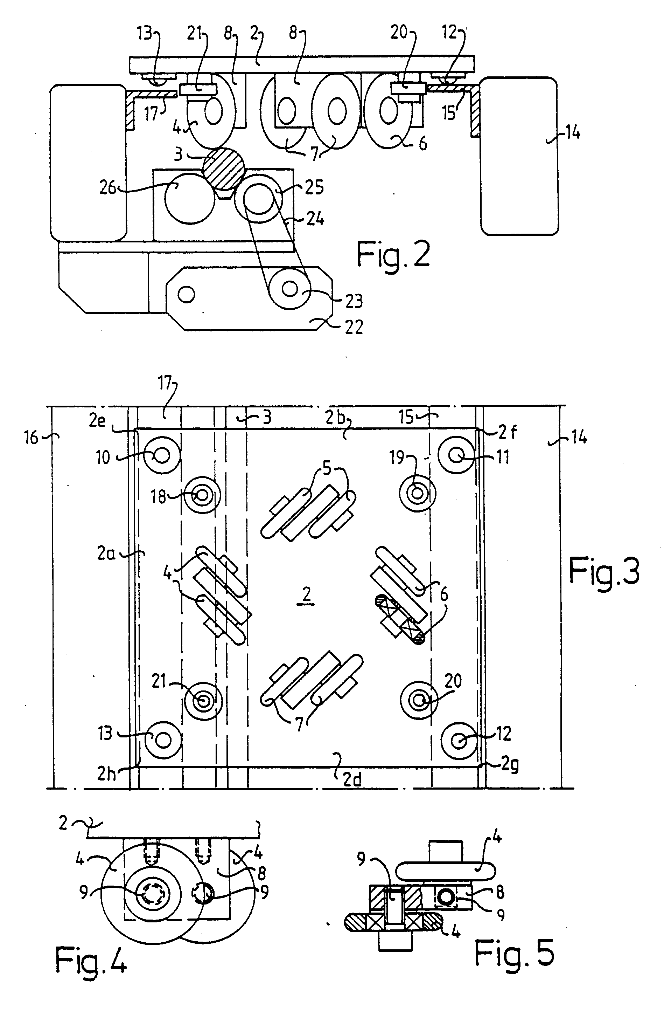

Im Bereich seiner vier Ecken 2e bis 2h ist der Werkstückträger 2 auf der Unterseite mit je einer Laufkugel 10, 11, 12 und 13 versehen, wobei immer zwei Laufrollen (in Fig. 3 die Rollen 11 und 12) auf einer an Längsholmen 14 der Transferstraße befestigen Laufschiene 15 rollen, während der Werkstückträger 2 auf der gegenüberliegenden Seite mit dem Reibrollenpaar 4 auf der am Längsholm 16 angeordneten Antriebswelle 3 aufliegt und von dieser seinen Vortrieb erhält. Die Laufrollen (hier 10 und 13) im Bereich des jeweils aufliegenden Reibrollenpaares sind hierbei ohne Auflagekontakt, so daß sich eine Dreipunktauflage ergibt. Das Beispiel der Fig. 2 und 3 zeigt die Laufrollen 11 und 12 auf der Laufschiene 15 aufliegend und die Auflage des Rollenpaares 4 auf der Antriebswelle 3, während die Laufkugeln 10 und 13 abgehoben sind. Erreicht nun der Werkstückträger bei seiner Vorwärtsbewegung eine Ecke der Transferstraße mit einem nach rechts abknickenden Streckenabschnitt, so kommen die Kugelrollen 12 und 13 auf der Laufschiene 15 des neuen Streckenabschnittes zur Auflage und das Reibrollenpaar 5 hat Kontakt mit der Antriebswelle 3 des neuen Streckenabschnitts. Die Laufrollen 10 und 11 sind hierbei abgehoben.

Anders als bei dem dargestellten Ausführungsbeispiel können die Reibrolleneinheiten jedoch auch derart abgefedert sein, daß alle vier Laufkugeln 10, 11, 12 und 13 auf den zugehörigen Laufschienen 15 und 17 aufliegen, wobei die Reibrolleneinheiten durch Federkraft gegen die Antriebswelle 3 gedrückt werden.

Im Bereich der Antriebswelle 3 ist entlang des Längsholmens 16 eine Führungsschiene 17 vorgesehen, die zusammen mit der Laufschiene 15 dem Werkstückträger 2 Seitenführung gibt. Zu diesem Zweck weist der Werkstückträger 2 an der Unterseite im Eckbereich je eine sich um eine senkrechte Achse drehende Führungsrolle (insgesamt also vier Führungsrollen 18, 19, 20 und 21) auf, von denen immer zwei Rollen (in Fig. 3 die Rollen 18 und 21 sowie 19 und 20) sich an den inneren Randkanten der Führungsschienen 15 und 17 abstützen.

Um ein hindernisfreies Übereckfahren des Werkstückträgers zu ermöglichen, sind nach einem weiteren Merkmal der Erfindung die Antriebswellen 3 auf einem riemengetriebenen Antriebsbett lose aufliegend gelagert, so daß sowohl beim Überfahren der Wellenenden als auch der 90°-Ecken des Karrees kein Rollhindernis vorhanden ist und somit diese Stellen ohne jede Unterbrechung durchfahrbar sind. Der Antrieb besteht aus einem am Holmen 16 mittels eines Schwenkarmes 22 befestigten Elektromotor 23, der über einen Zahnriemen 24 eine Reibrolle 25 antreibt. Diese Reibrolle 25 bildet zusammen mit einer frei laufenden Gegenrolle 26 das Antriebsbett. Die Reibrolle 25 ist zweckmäßig mit einem elastischen Belag versehen, um eine schlupffreie Mitnahme der aufliegenden Antriebswelle 3 zu erzielen. Der Abstand der angetriebenen Reibrolle 25 zur frei laufenden Rolle 26 ist selbstverständlich kleiner bemessen als der Durchmesser der Antriebswelle 3. Jede Antriebswelle 3 hat einen eigenen Motorantrieb, der sich jeweils am Ende einer Antriebswelle befindet, während das andere Wellenende lediglich auf antriebslose Stützrollen 27, 28 frei aufliegt. An ihren Stirnseiten sind die Antriebswellen mit Kugelrollen versehen.

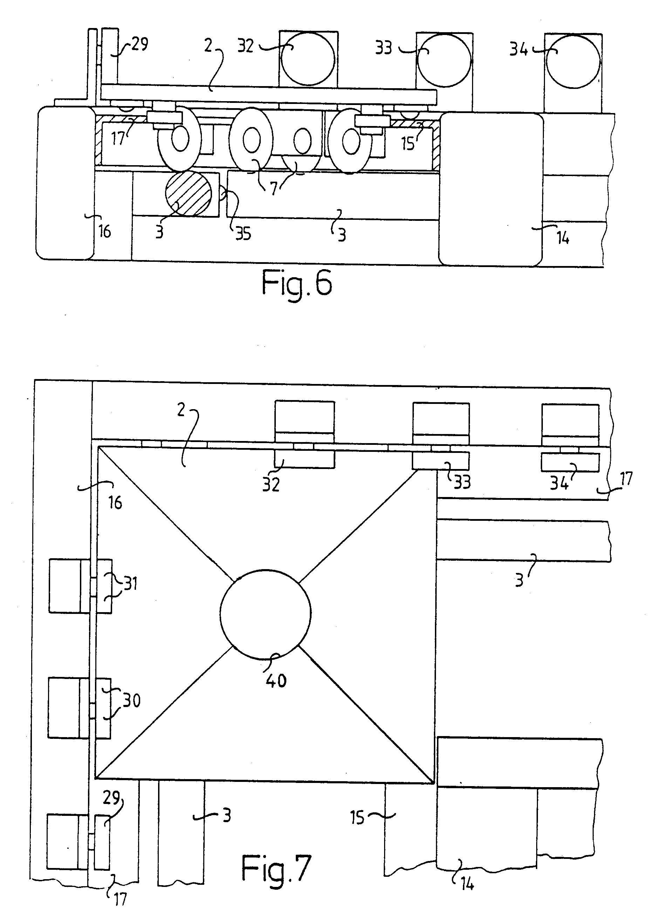

Im Bereich der Ecken des Karrees sind an den äußeren Längsholmen 16 mehrere den Werkstückträger 2 von oben übergreifende Leitrollen 29, 30, 31, 32, 33 und 34 vorgesehen, die den Werkstückträger 2 beim rechtwinkligen Übergang von einen Abschnitt zum anderen gegen ein Verkippen sichert (siehe Fig. 6 und 7).

Die an den Stirnseiten der Antriebswellen 3 angeordneten Kugelrollen sind mit 35 bezeichnet. Sie dienen der gegenseitigen reibungsarmen Abstützung. An den Ecken des Karrees sind zur axialen Abstützung der Antriebswellen 3 Widerlager 36 vorgesehen.

Die Werkstückträger 2 sind mit zentralen Ausnehmungen 40 versehen, die einen Zugang zu dem von dem Werkstückträger 2 getragenen Werkstück von unten ermöglichen.

## Patentansprüche

1. Montagetransferstraßensystem mit einer Mehrzahl von ein geschlossenes Karree bildenden, rechtwinklig zueinander verlaufenden Paaren von mit Abstand voneinander angeordneten Laufschienen (15, 17), parallel zu den Laufschienen (15, 17) verlaufenden Antriebswellen (3) und einer Mehrzahl von auf den Laufschienen (15, 17) geführten Werkstückträgern (2), dadurch gekennzeichnet, daß
- die Antriebswellen (3) etwas außermittig in Richtung auf die äußere der Laufschienen (17) versetzt zwischen den Laufschienen (15, 17) angeordnet sind, und
- die Werkstückträger (2) mit einer punktsymmetrisch zur Mitte der Werkstückträger (2) auf diesen angeordneten Reibradanordnung versehen sind, die durch wenigstens eine unter einem Winkel zu der Antriebswelle (3) ausgerichtete, auf die Antriebswelle (3) wirkende Reibradeinheit (4, 5, 6, 7) gebildet wird.

2. Montagetransferstraßensystem nach Anspruch 1, dadurch gekennzeichnet, daß die Werkstückträger (2) quadratisch ausgebildet sind und in ihren vier Ecken auf den Laufschienen (15, 17) laufende Laufkugeln (10, 11, 12, 13) tragen.

3. Montagetransferstraße nach Anspruch 1 oder 2, dadurch gekennzeichnet, daß die Antriebswellen (3) in Antriebsbetten (25, 26) ruhen.

4. Montagetransferstraße nach einem der vorangehenden Ansprüche, dadurch gekennzeichnet, daß die Reibradanordnung aus vier Reibrolleneinheiten (4, 5, 6, 7) bestehen, von denen jeweils eine einer der einem Streckenabschnitt des Montagetransferstraßensystems zugehörigen Antriebswelle (3) zugeordnet ist.

5. Montagetransferstraßensystem nach einem der vorangehenden Ansprüche, dadurch gekennzeichnet, daß der Auflagepunkt der Reibrolleneinheiten (4, 5, 6, 7) auf der den Vortrieb bewirkenden Antriebswelle (3) seitlich vom Wellenzenit liegt.

6. Montagetransferstraßensystem nach einem der vorangehenden Ansprüche, dadurch gekennzeichnet, daß die Reibrolleneinheiten (4, 5, 6, 7) als Doppelrollen ausgebildet sind, wobei die beiden eine Reibrolleneinheit (4, 5, 6, 7) bildenden Rollen versetzt zueinander angeordnet sind und von einem am Werkstückträger (2) befestigten Lagerbock (8) gehalten werden.

7. Montagetransferstraßensystem nach einem der vorangehenden Ansprüche, dadurch gekennzeichnet, daß der Werkstückträger (2) zu seiner Seitenführung (4) an den inneren Randkanten der Laufschienen (15, 17) geführte, sich um senkrechte Achsen drehende Führungsrollen (18, 19, 20, 21) aufweist.

8. Montagetransferstraßensystem nach einem der vorangehenden Ansprüche, dadurch gekennzeichnet, daß in den Eckbereichen des Systems außerhalb der äußeren der Laufschienen (15) den jeweils durchlaufenden Werkstückträger (2) von oben überfassende Niederhalterollen (29, 30, 31, 32, 33, 34) vorgesehen sind.

9. Montagetransferstraßensystem nach einem der vorangehenden Ansprüche, dadurch gekennzeichnet, daß die Reibradeinheiten (4, 5, 6, 7) abgefedert ausgebildet sind.

10. Montagetransferstraßensystem nach einem der vorangehenden Ansprüche, dadurch gekennzeichnet, daß die Werkstückträger (2) mit einer zentralen Ausnehmung versehen sind.

## Claims

1. Assembly transfer line system with a plurality of pairs of spaced guide rails (15,17), running at right angles to one another and forming a closed square, drive shafts (3) running parallel to the guide rails (15,17) and a plurality of pallets (2) guided on the guide rails (15,17), characterized in that the drive shaft (3) are positioned somewhat eccentrically in the direction of the outer of the guide raisl (17) between the said guide rails (15,17) and a friction wheel arrangement is placed on the pallets (2) so as to be centrosymmetrically positioned with respect to the centre thereof, said friction wheel arrangement being formed by at least one friction wheel unit (4,5,6,7) acting on the drive shaft (3) and oriented at an angle relative to the latter.

2. Assembly transfer line system according to claim 1, characterized in that the pallets (2) are square and carry in their four corners running balls (10,11,12) running on the guide rails (15,17).

3. Assembly transfer line system according to claims 1 or 2, characterized in that the drive shafts (3) rest in drive beds (25,26).

4. Assembly transfer line system according to one of the preceding claims, characterized in that the friction wheel arrangement comprises four friction roller units (4,5,6,7), whereof in each case one is associated with a drive shaft (3) belonging to a portion of the assembly transfer line system.

5. Assembly transfer line system according to one of the preceding claims, characterized in that the bearing point of the friction roller units (4,5,6,7) on the drive shaft (3) bringing about the advance is positioned laterally of the shaft zenith.

6. Assembly transfer line system according to one of the preceding claims, characterized in that the friction roller unit (4,5,6,7) are constructed as double rollers, the two rollers forming a friction roller unit (4,5,6,7) being displaced with respect to one another and secured by a hearing block (8) fixed to the pallet (2).

7. Assembly transfer line system according to one of the preceding claims, characterized in that the pallet (2) is provided with guide rollers (18,19,20,21), rotating about vertical axes and guided to its lateral guide (4) on the inner marginal edges of the guide rails (15,17).

8. Assembly transfer line system according to one of the preceding claims, characterized in that in the corner regions of the system outside the outer of the guide rails (15) of the passing through pallet (2) are provided hold-down rollers (29,30,31,32,33,34) engaging over from above.

9. Assembly transfer line system according to one of the preceding claims, characterized in that the friction wheel units (4,5,6,7) are sprung.

10. Assembly transfer line system according to one of the preceding claims, characterized in that the pallets (2) are provided with a central recess.

## Revendications

1. Système de machines transfert en ligne pour le montage
- avec plusieurs paires de glissières (15, 17) arrangées avec écart entre elles, formant un carré fermé et des angles droits
- avec des arbres de commande (3) s' etendant parallèlement aux glissières (15, 17)
- et avec plusieurs porteurs de pièce d' ouvrage (2) guidés sur les glissières (15, 17)
caractérisé par le fait que
- les arbres de commande (3) sont arrangés un peu excentriquement en direction de la glissière extérieure (17) et
- les porteurs de pièce d' ouvrage (2) sont munis d' un arrangement de roues de friction arrangés symétriquement par rapport à un point au centre des porteurs de pièce d' ouvrage (2) et que l' arrangement de roues de friction est formé par au moins une unité de roues de friction (4, 5, 6, 7), alignée sous un angle sur l' arbre de commande (3) et agissant sur l' arbre. de commande (3).

2. Système de machines transfert en ligne pour le montage d' après la revendication numéro 1, caractérisé par le fait pue les porteurs de pièce d' ouvrage (2) sont faits quadratiquement et qu' ils portent dans leurs quatre coins des billes (10, 11, 12, 13) roulant sur les glissières (15, 17).

3. Système de machines transfert en ligne pour le montage d' après la revendication numéro 1 ou 2, caractérisé par le fait que les arbres de commande (3) reposent dans des lits de commande (25, 26).

4. Système de machines transfert en ligne pour le montage d' après une des revendications préalables, caractérisé par le fait que l' arrangement de roues de friction se compose de quatre unités de galets de friction (4, 5, 6, 7), dont respectivement une est coordonnée à un arbre de commande (3) appartenant à une des sections du système de machines transfert en ligne pour le montage.

5. Système de machines transfert en ligne pour le montage d' après une des revendications préalables, caractérisé par le fait que le point d' appui des unités de galets de friction (4, 5, 6, 7) se trouve sur l' arbre de commande (3) qui effectue l' avancement et latéralement au zénith de l' arbre de commande.

6. Système de machines transfert en ligne pour le montage d' après une des revendications préalables, caractérisé par le fait que les unités de galets de friction (4, 5, 6, 7) sont des galets doubles et que les deux galets formant une unité de galets de friction (4, 5, 6, 7) sont disposés alternativement (de façon contrariée) et qu' ils sont tenus par un bâti de palier (8) attaché à un porteur de pièce d' ouvrage (2).

7. Système de machines transfert en ligne pour le montage d' après une des revendications préalables, caractérisé par le fait que le porteur de pièce d' ouvrage (2) est muni de galets de guidage (18, 19, 20, 21) conduits à son guidage latéral (4) aux rebords intérieurs des glissières (15, 17) et tournant autour d' axes verticales.

8. Système de machines transfert en ligne pour le montage d' après une des revendications préalables, caractérisé par le fait qu' il y a dans les coins du système et à l'extérieure de le glissière extérieure (17) des galets presseurs (29, 30, 31, 32, 33, 34) qui se posent d' en haut (en chevauchant) sur les porteurs de pièce d' ouvrage respectifs parcourant le système.

9. Système de machines transfert en ligne pour le montage d' après une des revendications préalables, caractérisé par le fait que les unités de roues de friction (4, 5, 6, 7) sont montées sur ressorts.

10. Système de machines transfert en ligne pour le montage d' après une des revendications préalables, caractérisé par le fait que les porteurs de pièce d' ouvrage (2) sont munis d' un creux central.
